Europäisches Patentamt

European Patent Office    (11) Publication number: **0 218 445**
A2
Office européen des brevets

# EUROPEAN PATENT APPLICATION

(21) Application number: **86307484.5**

(22) Date of filing: **30.09.86**

(51) Int. Cl.⁴: **G 11 B 5/31**

(30) Priority: **01.10.85 JP 218734/85**
**01.10.85 JP 218735/85**

(43) Date of publication of application: **15.04.87**
**Bulletin 87/16**

(84) Designated Contracting States: **DE FR GB NL**

(71) Applicant: **SONY CORPORATION,**
**7-35 Kitashinagawa 6-Chome Shinagawa-ku,**
**Tokyo 141 (JP)**

(72) Inventor: **Ikeda, Yoshito Pat. Div. Sony Corp.,**
**6-7-35 Kitashinagawa Shinagawa-ku, Tokyo 141 (JP)**
Inventor: **Narisawa, Hiroaki Pat. Div. Sony Corp.,**
**6-7-35 Kitashinagawa Shinagawa-ku, Tokyo 141 (JP)**
Inventor: **Wakabayashi,Noboru Pat. Div. Sony Corp.,**
**6-7-35 Kitashinagawa Shinagawa-ku, Tokyo 141 (JP)**

(74) Representative: **Thomas, Christopher Hugo et al, D**
**Young & Co 10 Staple Inn, London WC1V 7RD (GB)**

(54) **Thin film magnetic heads.**

(57) A thin film magnetic head includes a substrate (1) of magnetic or non-magnetic material, an upper magnetic film (11) on the substrate (1), a coil conductor (5, 8) on the substrate (1), and a lower magnetic film (2) on the substrate (1), the lower magnetic film (2) having a groove (3) formed therein for receiving the coil conductor (5, 8). The thickness (L2) of the lower magnetic film (2) at the groove (3) is at least 0.3 times the thickness (L1) of the upper magnetic film (11) when the substrate (1) is a magnetic material, and at least 0.8 times the thickness of the upper magnetic film (11) when the substrate (1) is a non-magnetic material.

1

## THIN FILM MAGNETIC HEADS

This invention relates to thin film magnetic heads, and more particularly, but not exclusively, to such heads suitable for pulse code modulation (PCM) recording and reproducing devices.

A thin film magnetic head is generally considered to be advantageous for mass production, and also in its uniformity of magnetic properties, since the coil conductors, the upper magnetic film and the insulating film that make up the magnetic circuit are formed by commercially available techniques such as sputtering. In addition, miniaturization, particularly the reduction in the track and gap widths, is facilitated in thin film magnetic heads, since the patterning may be achieved by conventional photolithographic techniques.

A thin film magnetic head is also magnetically advantageous, because the recording magnetic field in the head can be made quite intense, so permitting high density as well as high resolution recording. At the same time, the recording and reproducing device can be made small in size.

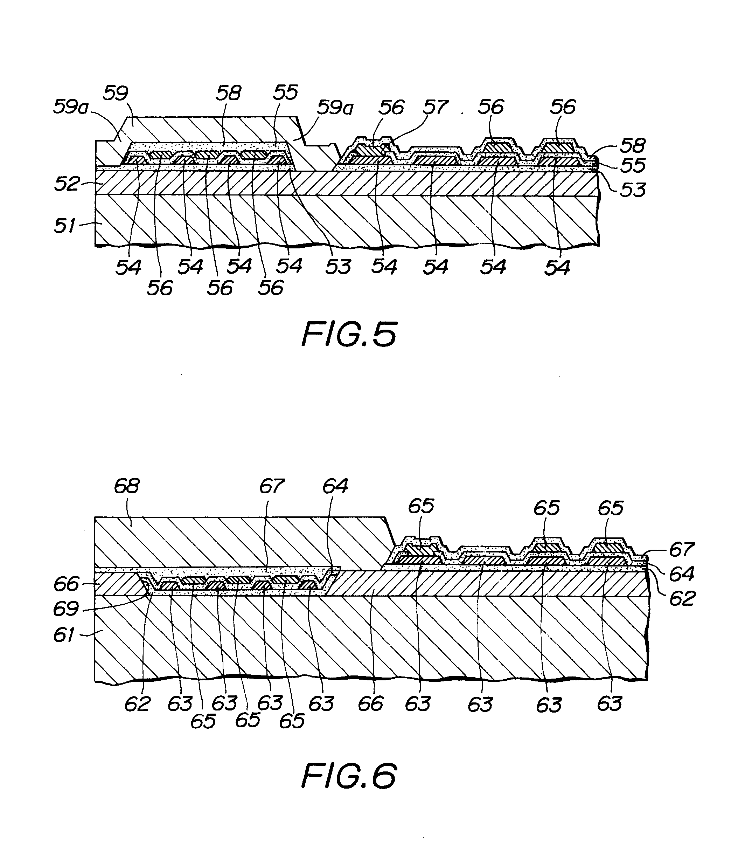

A previously proposed thin film magnetic head shown in Figure 5 of the accompanying drawings, comprises a lower magnetic film 52 composed of a ferromagnetic material such as "Sendust" (an Fe-Al-Si alloy) located in superposition on a non-magnetic substrate 51 formed, for example, of a ceramic material. With this type of structure, good magnetic recording and reproduction can be achieved even on a magnetic recording medium having a high coercive force, while achieving high density recording and reproduction. Several turns of a lower coil conductor 54 are applied in a flat spiral over the lower magnetic film 52, and are separated therefrom by means of a first insulating film 53. Several turns of an upper coil conductor 56 are wound in a similar manner on the lower coil conductor 54, with the interposition of a second insulating film 55.

In the example shown, four turns of the lower coil conductor 54 and three turns of the upper coil conductor 56 are applied in the manner described above. In addition, the lower and upper coil conductors 54 and 56 are electrically connected to each other through a contact window 57. On top of the upper coil conductor 56, an upper magnetic film 59 formed, for

0218445

example, of "Sendust" is provided with an intermediate third insulating film 58 to provide a predetermined track width. Hence, a closed magnetic loop is formed by the lower magnetic film 52 and the upper magnetic film 59 to permit magnetic recording and reproduction.

In this thin film magnetic head, there is a step-like difference in level necessarily formed in the upper magnetic film 59 due to the film thicknesses of the coil conductors 54 and 56. The thickness of the upper magnetic film 59 tends to be reduced on the stepped portions 59a as compared to that on the flat portion. For this reason, magnetic saturation is likely to occur in the upper magnetic film 59 during recording. Therefore, it is difficult to produce a large recording magnetic field.

In order to prevent magnetic saturation of the upper magnetic film from occurring, it has been suggested that the step-like level difference be eliminated, to provide a substantially flat upper magnetic film 68 as shown in Figure 6. Thus, there is provided a groove 69 for winding lower and upper coil conductors 63 and 65 therein, the groove 69 being located on a lower magnetic film 66 on a magnetic substrate 61 formed, for example, of a magnetic material such as ferrite. In the groove 69 there are wound the lower coil conductor 63 and the upper coil conductor 65, with intermediate insulating film 62 and 64. The upper magnetic film 68 is used in conjunction with an intermediate insulating film 67 to provide a predetermined track width.

The coil conductors 63 and 65 which would be responsible for a step-like level difference in the upper magnetic film 68 are in this case wound within the groove 69, with the result that the upper magnetic film 68 is substantially flat, and the film thickness is substantially uniform.

However, in the thin film magnetic head shown in Figure 6, the lower magnetic film 66 tends to become magnetically saturated during signal recording, with a resulting limitation on the recording magnetic field strength, due to the splitting of the lower magnetic film 66, despite the fact that the substrate 61 is formed of a ferrite or similar magnetic material.

Thus, in these thin film magnetic heads, either the lower or the upper magnetic film is likely to become magnetically saturated during signal recording, so that the recording field strength is significantly limited, and good recording and/or reproducing properties are not obtained.

According to the present invention there is provided a thin film magnetic head comprising:

a substrate;

an upper magnetic film on said substrate;

a coil conductor on said substrate; and

a lower magnetic film on said substrate, said lower magnetic film having a groove formed therein receiving said coil conductor therein;

characterised in that:

the thickness of said lower magnetic film at said groove is at least 0.3 times the thickness of said upper magnetic film when said substrate is composed of a magnetic material, and is at least 0.8 times the thickness of said upper magnetic film when said substrate is composed of a non-magnetic material.

A preferred embodiment of the present invention is a thin film magnetic head on a substrate including a lower magnetic film, coil conductors, and an upper magnetic film which are arranged in layers with the use of intermediate insulating films. A groove for winding the coil conductors therein is formed in the lower magnetic film, and when the substrate is formed of a non-magnetic material, the groove is dimensioned so that the film thickness of the lower magnetic film in the groove is equal to or greater than 0.8 times the thickness of the upper magnetic film. When the substrate is formed of a magnetic material, the groove is proportioned such that the film thickness of the lower magnetic film in the groove is equal to or greater than 0.3 times the thickness of the upper magnetic film.

In this way, since the coil conductors are wound in the groove formed in the lower magnetic film, the upper magnetic film can be substantially flat, so that the upper magnetic film does not become magnetically saturated except in the region of its depth. In addition, since the lower magnetic film in the groove has a film thickness as defined above, the lower magnetic film also does not become magnetically saturated.

The invention will now be described by way of example with reference to the accompanying drawings, throughout which like parts are referred to by like references, and in which:

Figure 1 is a plan view showing parts of an embodiment of thin film magnetic head according to the present invention;

Figure 2 is a cross-sectional view along the line A-A in Figure 1;

Figure 3 is a diagram showing the relationship between magnetomotive force and recording magnetic field in thin film magnetic

4      *0218445*

heads which use non-magnetic substrates;

Figure 4 is a diagram similar to Figure 3 for thin film magnetic heads using magnetic substrates;

Figure 5 is a cross-sectional view showing parts of a previously-proposed thin film magnetic head; and

Figure 6 is a cross-sectional view showing another previously-proposed thin film magnetic head.

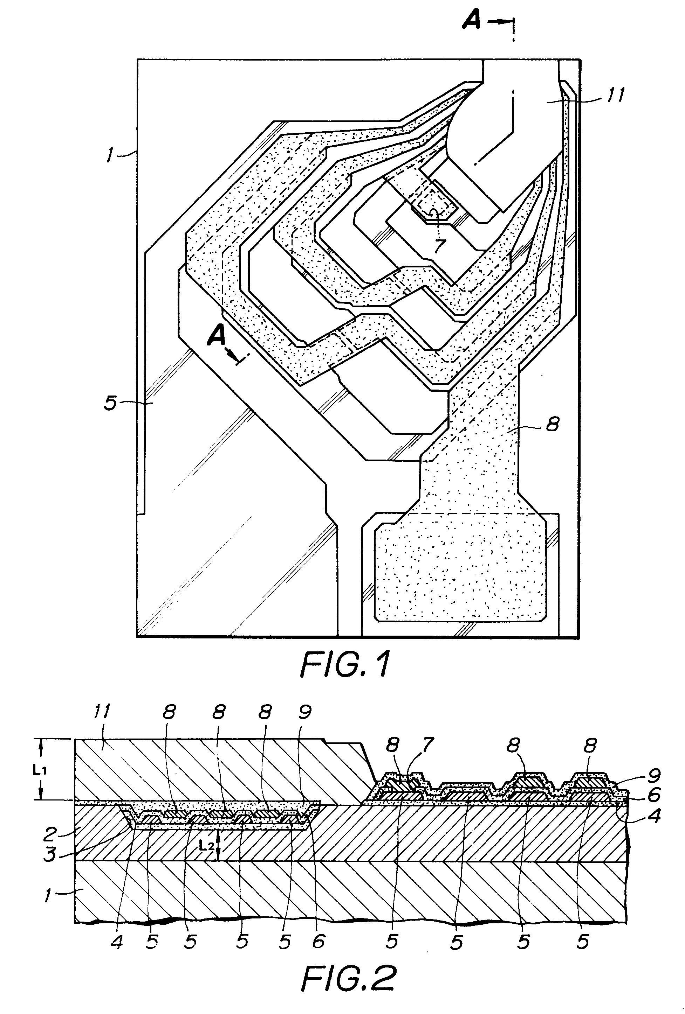

An embodiment of thin film magnetic head according to the present invention as shown in Figures 1 and 2, comprises a lower magnetic film 2, a lower coil conductor 5, an upper coil conductor 8, and an upper magnetic film 11 in that order on one side of a substrate 1, with intermediate insulating films 4, 6 and 9, respectively.

On the lower magnetic film 2 there is formed a groove 3 by a machining operation for eliminating the step-like level difference that would otherwise be caused by the coil conductors 5 and 8 being wound on the lower magnetic film 2. That portion of the lower magnetic film 2 where the groove 3 is formed has a film thickness selected relative to the film thickness of the upper magnetic film 11, and in dependence on whether the substrate 1 is of a non-magnetic material or a magnetic material. In addition, it is to be noted that the selection of the film thickness of the upper magnetic film depends on the type of substrate.

When using a non-magnetic substrate 1, the film thickness of the lower magnetic film 2 at the groove 3 is such that it equals or exceeds 0.8 times the thickness of the upper magnetic film 11. When using a magnetic substrate 1, the film thickness of the lower magnetic film 2 at the groove 3 is adjusted to be at least 0.3 times the thickness of the upper magnetic film 11.

The non-magnetic substrate 1 may be formed of a non-magnetic material such as $Al_2O_3$-TiC, BaO-$TiO_2$, $Li_2$O-$SiO_2$, MnO-NiO, CaO-$TiO_2$, or a glass type ceramic.

The magnetic substrate 1 may be formed of a ferromagnetic oxide such as an Mn-Zn ferrite or an Ni-Zn ferrite. Materials for the lower magnetic film 2 and the upper magnetic film 11 include ferromagnetic metal materials such as Fe-Ni alloys (Permalloy), Fe-Al-Si alloys (Sendust) or an amorphous alloy.

According to our experiments, the relationship between the film thicknesses is of importance, and by proper control of the relative film thicknesses, the problems caused by magnetic saturation can be reduced, with an improvement in the magnetic efficiency.

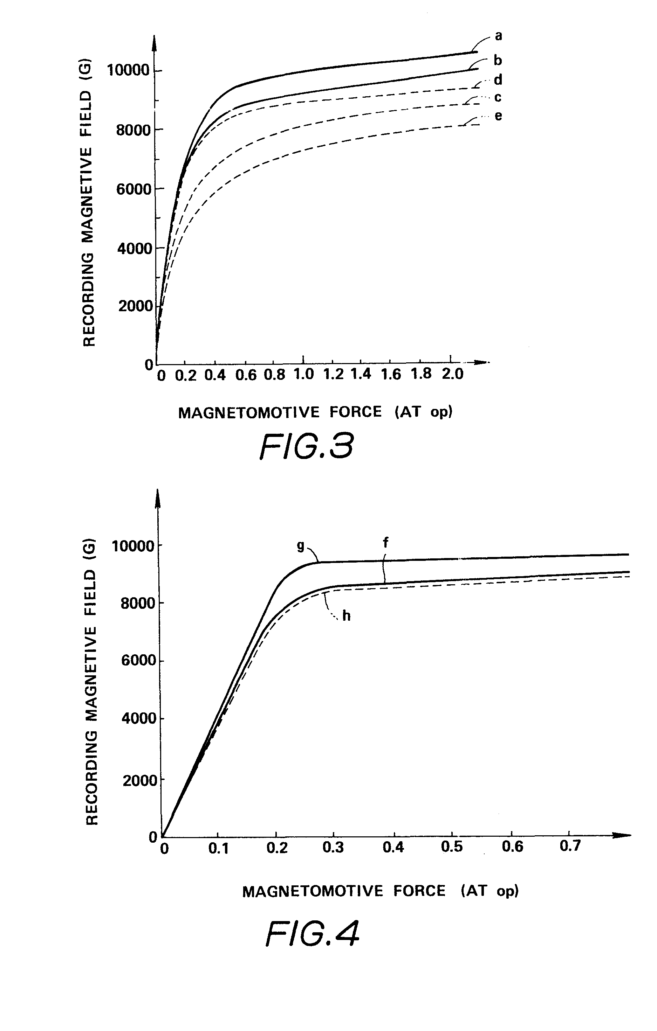

A thin film magnetic head was prepared using a ceramic non-magnetic substrate material and "Sendust" as the material for the lower magnetic film 2 and the upper magnetic film 11, the film thickness L1 of the upper magnetic film 11 being about $10 \mu m$ and the film thickness L2 of the lower magnetic film 2 in the groove 3 being 10, 8 or $5 \mu m$. The magnetomotive force dependency of the recording magnetic field was determined. The result is shown in Figure 3 by a curve a (for $L2 = 10 \mu m$), a curve b(for $L2 = 8 \mu m$) or a curve c for ($L2 = 5 \mu m$).

For the sake of comparison, a thin film magnetic head as shown in Figure 5 was produced with a lower magnetic film 52 of "Sendust" $10 \mu m$ thick and an upper magnetic film 59 of "Sendust" $10 \mu m$ thick on a ceramic substrate 51, and the magnetomotive force dependency of the recording magnetic field was investigated. The results were as indicated by a curve d in Figure 3.

A thin film magnetic head as shown in Figure 6 having a lower magnetic film 66 of "Sendust" $5 \mu m$ thick and an upper magnetic film 68 of "Sendust" $10 \mu m$ thick on a magnetic substrate 61 of Mn-Zn ferrite was prepared, and the magnetomotive force dependency of the recording magnetic field thereof was determined. The results are shown by curve e in Figure 3.

It will be seen from Figure 3 that, with a non-magnetic substrate, a larger recording field strength can be realised at a lower magnetomotive force than in the case of the previously-proposed magnetic head, so long as the film thickness L2 of the lower magnetic film 2 in the groove 3 is adjusted so as to be not less than 0.8 times the film thickness L1 of the upper magnetic film 11.

Another thin film magnetic head was produced using an Mn-Zn ferrite as the magnetic substrate material and "Sendust" alloy as the upper and lower magnetic film materials. The film thickness L1 of the upper magnetic film 11 was $10 \mu m$, and the film thickness L2 of the lower magnetic film 2 in the groove 3 was 3 or $5 \mu m$. The magnetic head thus produced had a magnetomotive force dependency of the recording magnetic field (the magnetic field in the gap) as shown by curves f and g in Figure 4 for

L2 = 3 $\mu$ m and L2 = 5 $\mu$ m, respectively.

For the sake of comparison, a thin film magnetic head as shown in Figure 4 was prepared with a film thickness of the upper magnetic film 58 of Mn-Zn ferrite of 10 $\mu$ m, and that of the lower magnetic film 52 of "Sendust" of 5 $\mu$ m. The magnetic head thus produced had a magnetomotive force dependency of the recording magnetic field as shown by curve h in Figure 4.

It can be seen from Figure 4 that in the case of a magnetic substrate, a larger recording field strength for a low magnetomotive force can be obtained by using a film thickness L2 of the lower magnetic film 2 in the groove 3 not less than 0.3 times the thickness L1 of the upper magnetic film 11.

Within the thus described groove 3, there is formed the insulating film 4 composed, for example, of $SiO_2$. On top of the insulating film 4 the lower coil conductor 5 of a metallic conducting material such as Al or Cu can be formed by pattern etching into a flat spiral with a predetermined distance between the adjacent turns. On top of the lower coil conductor 5 there is deposited the insulating film 6 to cover the lower coil conductor 5. The upper coil conductor 8 in the form of a flat spiral having the same winding direction as the lower coil conductor 5 is formed and electrically connected with a contact window 7 opening in the insulating film 6. In the embodiment shown, four and three turns of the lower and upper coil conductors 5 and 8 are provided, respectively. In other words, the coil conductors 5 and 8 are arranged in a flat spiral of a two-layered, seven-turn winding configuration. On top of the upper coil conductor 8 there is formed the insulating film 9 so as to fill the groove 3 while providing for insulation from the upper magnetic film 11 as will be later described.

Although the coil conductors 5 and 8 shown are arranged in flat spiral or in convolutions, any other suitable winding pattern such as a zig-zag or a multiple helical pattern may be used.

The upper magnetic film 11 of a ferromagnetic material such as "Sendust" or "Permalloy" is deposited to a predetermined track width so as to cover the front and back gap sections and the groove 3.

When the coil conductors 5 and 8, and an external terminal (not shown) are connected to one another, and an energizing current is supplied to the coil conductors 5 and 8, magnetic fluxes are produced in a magnetic path comprising the lower magnetic film 2 and the upper magnetic film 11, in such a way that magnetic recording is performed on the magnetic recording medium by leakage fluxes in the front gap section.

In the groove 3, the turns of the upper coil conductor 8 are placed between the adjacent turns of the lower coil conductor 5 in the grooves 3 so as to fill the gap therebetween, and the insulating film 9 on the coil conductors 5 and 8 will then be substantially flat. As a result, the upper magnetic film 11 also becomes substantially flat. In this way, the step-like level difference in the upper magnetic film 11 is eliminated to provide a flat film of a uniform thickness, resulting in reduced possibility of magnetic saturation in the upper magnetic film 11 which might otherwise be caused during recording, as well as increasing the recording field strength. The result is a low magnetomotive force, and improved recording and reproducing efficiency.

In forming the upper magnetic film 11, the overall surface of the substrate 1 is coated with the ferromagnetic metal material, which is then subjected to patterning to a predetermined shape by physical processes such as ion etching. Since the upper magnetic film 11 is flat, patterning fluctuations in the upper magnetic film 11 are minimized, thus making it possible to provide a thin film magnetic head with superior magnetic properties.

In addition, magnetic saturation is less likely to occur in the lower magnetic film 2 and the upper magnetic film 11, so the recording field strength can be adjusted to a larger value, and the desired recording field strength is assured even with increased depth. Therefore, by selecting a longer depth length, wear of the magnetic head is reduced, with improved durability and service life of the magnetic head.

8

0218445

CLAIMS

1. A thin film magnetic head comprising:
a substrate (1);
an upper magnetic film (11) on said substrate (1);
a coil conductor (5, 8) on said substrate (1); and
a lower magnetic film (2) on said substrate (1), said lower magnetic film (2) having a groove (3) formed therein receiving said coil conductor (5, 8) therein;
characterised in that:
the thickness (L2) of said lower magnetic film (2) at said groove (3) is at least 0.3 times the thickness (L1) of said upper magnetic film (11) when said substrate (1) is composed of a magnetic material, and is at least 0.8 times the thickness (L1) of said upper magnetic film (11) when said substrate (1) is composed of a non-magnetic material.

2. A magnetic head according to claim 1 wherein said coil conductor (5, 8) is composed of aluminium or copper.

3. A magnetic head according to claim 1 or claim 2 wherein said substrate (1) is a non-magnetic material of $Al_2O_3$-TiC, $BaO$-$TiO_2$, $Li_2O$-$SiO_2$, MnO-NiO, CaO-$TiO_2$, or a glass ceramic.

4. A magnetic head according to claim 1 or claim 2 wherein said substrate (1) comprises a magnetic ferrite.

FIG.1

FIG.2

FIG.3

FIG.4

FIG.5

FIG.6